**Europäisches Patentamt**

**European Patent Office**

**Office européen des brevets**

(19)

(11) Veröffentlichungsnummer: **0 111 167**

**A1**

(12) # EUROPÄISCHE PATENTANMELDUNG

(21) Anmeldenummer: 83111187.7

(22) Anmeldetag: 09.11.83

(51) Int. Cl.³: **A 01 D 45/00**
**A 01 D 46/20, B 65 B 25/04**

(30) Priorität: 09.11.82 DE 8231401 U

(43) Veröffentlichungstag der Anmeldung:
20.06.84 Patentblatt 84/25

(84) Benannte Vertragsstaaten:
IT

(71) Anmelder: Marschall, Fritz
Schackstrasse 5
D-8000 München 22(DE)

(72) Erfinder: Marschall, Fritz
Schackstrasse 5
D-8000 München 22(DE)

(74) Vertreter: Bauer, Robert, Dipl.-Ing. et al,
Boeters, Bauer & Partner Patentanwälte
Thomas-Wimmer-Ring 14
D-8000 München 22(DE)

(54) **Fahrbares Hilfsgerät zum Zurichten, Sortieren und Verpacken von Gemüse, Blumen, Gartenbau- und Feldfrüchten und dergl.**

(57) Ein fahrbares Hilfsgerät zum Zurichten, Sortieren und Verpacken von Gemüse, Blumen, Gartenbau- und Feldfrüchten und dergl. weist auf einem ggf. selbstfahrenden und als Wechselbrückenträgerfahrgestell ausgebildeten Fahrgestell (4) eine Ladeplattform (2) und an deren rückwartigem Ende einen Querbalken (6) auf, an dem sich rückseitig miteinander abwechselnd Ablagetische (24) und Packtische (26) für das geerntete, zu verpackende Gut (54) befinden. Eine Packbehälterauflage (34) für leere Behälter (56), z.B. Kartons, eine weitere Packbehälterauflage (36) für die jeweils zu befüllenden Behälter sowie von beiden Seiten zu der Ladeplattform (2) hinführende Förderbahnen (38) verlaufen entlang dem Querbalken (6). Die leeren Behälter werden von auf der Ladeplattform (2) befindlichen Arbeitskräften auf die betreffende Behälterauflage (34) aufgelegt und über diese weitergeschoben. Hinter dem sich stetig weiterbewegenden Gerät, in den Zwischenräumen zwischen aufeinanderfolgenden Ablagetischen (24), schreiten oder sitzen weitere Personen, die sog. Packer, die das auf die Ablagetische (24) aufgelegte Erntegut abnehmen, kontrollieren, ggf. in Papier oder eine Folie einschlagen und sodann je nach Größe, Qualität oder dergl. sogleich in einen jeweils mehrerer auf der weiteren Behälterauflage (36) bereitstehender Behälter (56) einlegen. Die gefüllten Behälter werden auf die unmittelbar davorliegende Förderbahn (38) geschoben, von der sie zu der Ladeplattform (2) transportiert werden. Dort werden sie von den dort Beschäftigten verschlossen und - gewünschtenfalls paletteirt - gestapelt.

./...

Fig. 1

Fahrbares Hilfsgerät zum Zurichten, Sortieren und Verpacken von Gemüse, Blumen, Gartenbau- und Feldfrüchten
und dergl.

---

Die Erfindung betrifft ein fahrbares Hilfsgerät zum Zurichten, Sortieren und Verpacken von Gemüse, Blumen, Gartenbau-
und Feldfrüchten und dergl. gemäß Gattungsbegriff des
Anspruchs 1.

Ein derartiges Hilfsgerät, mit dem die genannten Arbeiten
von entsprechenden Arbeitskräften in schonender Weise sogleich am Ort der Ernte durchgeführt werden können, ist
in der Form bekannt (Prospekt "SEACO INDUSTRIES AGRICUL-
TURAL/INDUSTRIAL EQUIPMENT" der Firma Seaco Industries,
Salinas, Kalifornien/USA), daß der Querbalken etwa in der
Mitte der Ladeplattform auf einem Lkw-Fahrgestell aufruht
und beiderseits desselben je einen durchgehenden Packtisch
trägt, daß die Förderbahnen aus gegenläufigen Förderbändern bestehen, daß die Packbehälterauflage für Leerbehälter in Gestalt zweier nebeneinanderliegender Rollenbahnen
in Fahrtrichtung über dem Fahrgestellt verläuft und daß
darunterliegend rückwärtig an den Querbalken zwei weitere
Rollenbahnen für die gefüllten Behälter anschließen, die
hinter dem Fahrgestell knapp über dem Boden enden.

Im Einsatz dieses Geräts, das sich dabei in der Regel
ständig langsam fortbewegt, schreitet eine Reihe von Arbeitskräften hinter dem Querbalken her, um die von Erntearbeitern verpackungsfertig auf die Packtische aufgelegten
Waren, wie z.B. Salatköpfe, zu kontrollieren, ggf. in Papier
oder eine Kunststoffolie einzuschlagen und sodann auf das davorliegende Förderband aufzulegen, das sie zu dem Fahrgestell hin führt. Dort werden die Waren von zwei weiteren,
zwischen den beiden letztgenannten Rollenbahnen in einer
Aussparung des Fahrgestells schreitenden Arbeitskräften
wahlweise in einen zweier auf den Rollenbahnen bereitstehender Kartons einsortiert, die nach Befüllung über die
betreffende Rollenbahn auf den Erdboden abgeworfen werden.
Die Kartons werden von noch zwei weiteren, vor dem Querbalken auf der Ladeplattform stehenden Arbeitskräften aus
dort gestapelten Zuschnitten gebildet und sodann auf die
Packbehälterauflage für das Leergut aufgelegt, von der
sie nach Bedarf abgenommen werden.

Der Erfindung liegt die Aufgabe zugrunde, bei einem Gerät
gattungsgemäßer Art die genannten Arbeiten noch weiter zu
rationalisieren sowie schonender zu gestalten, dabei vor
allem das Abwerfen und spätere Einsammeln der gefüllten
Behälter zu erübrigen und eine lückenlose Kette der an dem
Querbalken beschäftigten Arbeitskräfte zu ermöglichen.

Diese Aufgabe ist durch die kennzeichnenden Merkmale des
Anspruchs 1 gelöst.

Die zweierlei miteinander abwechselnden Tische ermöglichen
es, die Kontroll-, Sortier- und Packarbeit ungehindert
durch die neu hinzugegebenen Waren ausführen zu können,
und dazu noch, den Sortier- und Verpackungsvorgang durch
die gleichen Personen erledigen zu lassen, die auch die
Kontrolle und ggf. das Einschlagen vornehmen. Diese nehmen
die Leerbehälter an dem jeweiligen Packtisch von dem Querbalken ab, setzen sie auf die tieferliegende zweite Behälterauflage um und befüllen sie mit den Waren einer bestimmten Warenklasse. Die gefüllten Behälter werden auf die davorliegende Förderbahn geschoben, die sie zu der Ladeplattform führt. Dort werden sie von ein oder zwei Arbeitskräften gestapelt und ggf. sogleich palettiert, die auch
für die Vorbereitung und das Auflegen der Leerbehälter
auf die betreffende Behälterauflage zuständig sind.

Die Behälter bzw. Kartonzuschnitte und/oder die Paletten
werden vorteilhafterweise von eigenen Auflagetischen entnommen, die sich beiderseits an die Ladeplattform anschliessen. Die Ablagetische können im Bedarfsfall tiefer als
die Packtische angeordnet sein, um am Boden arbeitenden
Erntearbeitern das Auflegen der Waren zu erleichtern. Da die
beiden Förderbahnen in der Regel lediglich Behälter, wie
Kartons, Kisten oder Steigen, zu fördern haben, können sie
in einfacher Weise aus zur Ladefläche hin geneigten, antriebslosen Rollenbahnen bestehen. Die Ablage- wie die
Packtische können seitlich versetzbar, hochklappbar und
ggf. abnehmbar an dem Querbalken angebracht sein, und der
Querbalken selbst kann höhenverstellbar angeordnet sein.
Ferner kann er geteilt sein, um die beiden Kragarme zur
Straßenfahrt und zum raumsparenden Abstellen des Geräts
nach oben oder - vorzugsweise - nach vorne über die Ladeplattform sowie gewünschtenfalls auch nach hinten schwenken
zu können. Zumindest die Ladeplattform kann eine Überdachung
aufweisen, ggf. verbunden mit beiderseitigen Vorhängen,
um das verpackte Gut vor Witterungseinflüssen wie vor allem
Sonneneinstrahlung zu schützen. Sodann kann das Fahrgestell
als Wechselbrückenträgerfahrgestell ausgebildet sein, um
den Aufbau aus Ladeplattform, Querbalken etc. gewünschtenfalls gegen einen anderen austauschen zu können; und dergl.
mehr. Diese und weitere vorteilhafte Ausgestaltungsmöglichkeiten bilden den Gegenstand der Unteransprüche.

Es hat sich gezeigt, daß die größte Wirtschaftlichkeit
und Schonung des geernteten Gutes im allgemeinen nicht
mit einem höchstmöglichen Grad von Automatisierung zu erreichen ist. In diesem Sinne bietet das erfindungsgemäße
Hilfsgerät, welches mit Ausnahme seines Vortriebs ggf.
völlig antriebslos arbeiten kann und dennoch an Ort und
Stelle der Ernte eine versandfähige Verpackung ergibt,
eine optimale Lösung. Die fertigen, ggf. palettierten Behälter brauchen nur noch von Zeit zu Zeit von der Ladeplattform auf ein Transportfahrzeug umgeladen zu werden.

Nachfolgend werden bevorzugte Ausführungsbeispiele des
erfindungsgemäßen Gerätes anhand der Figuren im einzelnen
beschrieben. Dabei zeigt

Fig. 1 etwas schematisch eine Seitenansich des rückwärtigen
       Teils des Geräts, in einer ersten Ausführungsform,

Fig. 2 eine Draufsicht auf diesen rückwärtigen Teil, wobei
       eine Überdachung weggelassen und eine der beiden
       Förderbahnen sowie die Packbehälterauflagen abgebrochen erscheinen,

Fig. 3 eine Seitenansicht des Geräts in einer anderen Ausführungsform als Wechselbrückenfahrzeug,

Fig. 4 eine Draufsicht auf das Gerät nach Fig. 3, wobei
       wiederum eine Überdachung weggelassen erscheint,

Fig. 5 eine rückwärtige Ansicht des Geräts nach Fig. 3,

Fig. 6 eine Seitenansicht, nach oben teilweise abgebrochen,
       eines Geräts etwa nach Fig. 3, gekuppelt mit einem
       weiteren Fahrzeug für die Übernahme und den Abtrans-
       port des verpackten Gutes,

Fig. 7 einen anderen Wechselbrückenaufbau in Gestalt eines Kühlkoffers und

Fig. 8 noch einen weiteren Wechselbrückenaufbau in Gestalt eines landwirtschaftlichen Spritzgeräts.

Wie aus den Figuren ersichtlich, ist am rückwärtigen Ende eines eine Ladeplattform 2 tragenden Fahrgestells 4 ein Querbalken 6 angebracht, der zu beiden Seiten über die Ladeplattform 2 hinausragende Kragarme 8 bzw. 10 bildet. Diese (aus einem später noch erläuterten Grunde) etwas ungleich langen Kragarme 8 und 10 sind mittels senkrechtstehender Scharniere 12 schwenkbar an einen Schlitten 14 angelenkt, der seinerseits in einer vertikalen Führung 16 auf- und abbeweglich ist. Dazu ist am oberen Ende der Führung 16 eine handbedienbare Seilwinde 18 vorgesehen, an welcher der Schlitten 14 aufgehängt ist.

An zwei untenliegenden Holmen 20 bzw. 22 des Querbalkens 6 sind nebeneinanderliegend miteinander abwechselnd Ablagetische 24 und Packtische 26 angebracht, von denen die Ablagetische 24 tiefer liegen und weiter nach hinten reichen als die Packtische 26. Beide Arten Tische sind lösbar und seitlich versetzbar an dem betreffenden Holm 20 bzw. 22 eingehängt derart, daß sie bei Nichtgebrauch hochgeklappt werden können. Vor einem jeden Packtisch 26 befindet sich eine Rinne 28 zur Aufnahme einer Papier- oder Folienrolle 30, neben der auf der Seite des Tisches eine Abtrennvorrichtung 32 mit einer giebelförmigen Trennkante angeordnet ist. Dazu noch kann im Bedarfsfall je eine Wiegeeinrichtung, eine Lehre oder dergl. vorgesehen sein.

Oberhalb der Holme 20 und 22 befinden sich an dem Querbalken 6 übereinanderliegende, über die Länge der Kragarme

9 und 10 jeweils durchlaufende Packbehälterauflagen 34 und 36 in Gestalt von miteinander verstrebten Schienen, die als solche selbst einen tragenden Bestandteil des Querbalkens bilden. Während sich die obere Behälterauflage, 34, in einer Höhe befindet, daß sie von einer hinter dem Fahrgestell 4 einherschreitenden Person noch bequem erreichbar ist, liegt die Behälterauflage 36 auf einem Niveau knapp oberhalb der Ladeplattform 2. Zur Erleichterung des Zugriffs sind beide Behälterauflagen nach rückwärts und unten geneigt.

Vorderseitig schließt sich an die Behälterauflage 36 an jedem der beiden Kragarme 8 und 10 je eine Förderbahn 38 in Gestalt einer zur Ladeplattform 2 hin leicht abfallenden, antriebslosen Rollenbahn an derart, daß die auf der Behälterauflage 36 aufliegenden Behälter von dort leicht auf die Förderbahn geschoben werden können.

Unmittelbar vor dem Querbalken 6 sind an dem Fahrgestell 4 beiderseits der Ladeplattform 2 hochklappbare, einziehbare oder abnehmbare Auflagetische 40 angeordnet, die im Einsatz des Geräts begehbar sind und eine zusätzliche Lade- und/oder Ablagefläche für Packgut bilden können.

Über der Ladeplattform 2 ist eine Überdachung 42 in Gestalt einer üblichen Planenüberdachung vorgesehen, die sich im Bedarfsfall noch über den Querbalken 6 hinweg fortsetzen kann. An die Überdachung 42 schließen sich nach unten beiderseits der Ladeplattform 2 nach vorne hin zusammenraffbare Vorhänge 44 an.

Zur Einstellung der Spurweite des Fahrgestells 4 nach den jeweiligen Bedürfnissen (Kultur- bzw. Furchenabstand) sind die Räder 46 des Fahrgestells einzeln an Wangen 48 aufgehängt, die in einer querverlaufenden Führung 50 verschiebbar und mittels einer gegenläufigen Gewindespindel 52 verstellbar sind.

Während sich nun im Betrieb das so weit beschriebene Gerät mit geringer Geschwindigkeit beispielsweise von 100 m/h über einen Acker bewegt, werden von Erntekräften die betreffenden Feldfrüchte oder dergl., wie z.B. Salatköpfe 54, abgeerntet, geputzt, d.h. z.B. von welken Blättern befreit, und sodann auf dem jeweils nächstliegenden Ablagetisch 24 abgelegt. Von dort werden sie von den hinter dem Querbalken 6 einherschreitenden Kräften, den sog. Packern, entnommen, kontrolliert, gewünschtenfalls eingeschlagen und sodann je nach ihrer Größe, Qualität oder dergl. in jeweils einen dafür vorgesehenen Packbehälter 56 eingelegt, der als Leerbehälter zuvor der Behälterauflage 34 entnommen und auf die Behälterauflage 36 umgesetzt wurde. Genauer gesagt befüllt der jeweilige Packer beispielsweise zwei unmittelbar vor ihm auf der Behälterauflage 36 stehende Behälter mit jeweils einer der beiden häufigsten Warenklassen, während er links und rechts daran anschließende Behälter gemeinsam mit seinem Nachbarn mit den weniger häufigen Warenklassen befüllen kann.

Ist ein Behälter gefüllt, so wird er auf die davorliegende Förderbahn 38 geschoben, auf der er unter der Einwirkung seines Eigengewichts zu der Ladeplattform 2 hinläuft. Dort werden die eintreffenden Behälter von den dort Beschäftigten, ggf. nach Verschließen, auf Paletten 39 gestapelt, die einem der beiden Auflagetische 40 entnommen werden. Die

Überdachung 42 mit Vorhängen 44 schützt dabei die verpackten Waren vor Witterungseinflüssen wie vor allem Sonneneinstrahlung. Die gleichen auf der Ladeplattform 2 beschäftigten Personen versehen zwischenzeitlich die Behälterauflage 34 mit Leerbehältern, die ggf. an dieser Stelle aus Kartonzuschnitten gebildet werden. Die Leerbehälter werden von Hand in dem Maße, wie sie aufgelegt werden, entlang der Behälterauflage 34 weitergeschoben.

Um die auf der Behälterauflage 34 aufliegenden Leerbehälter, insbesondere Kartons, dagegen zu schützen, vom Wind abgeworfen zu werden, kann sich über die Behälterauflage 34, wie gezeigt, ein Niederhalter in Gestalt einer ggf. höhenverstellbaren Leiste, Gummischnur oder dergl., 58, hinziehen.

Zum Straßentransport und zum Abstellen des Geräts können die Tische 24 und 26 hochgeklappt und sodann die Kragarme 8 und 10 bei hochgezogenem Querbalken 6 über die Ladeplattform 2 nach vorne eingeschwenkt werden, worauf auch noch die beiden Auflagetische 40 hochgeklappt werden können. Auf diese Weise wird die Breite des Geräts im wesentlichen durch die Ladeplattform 2 bestimmt. Im übrigen aber erlaubt die Winde 13 auch eine Höheneinstellung des Querbalkens 6 entsprechend der Pflanzenhöhe bzw. der gewünschten Höhe des Arbeitsplatzes.

Die ungleiche Länge der beiden Kragarme 8 und 10 ermöglicht es, einen Ablagetisch 24 in der Mitte des Querbalkens 6 anzuordnen. Im übrigen aber können die Ablage- und Packtische 24 bzw. 26 nach Bedarf und in variablen Abständen angebracht werden. Dazu noch kann die Länge des Querbalkens 6, ggf. durch An- oder Abbau von Ansatz- oder Zwischenstücken, in weiten Grenzen variieren.

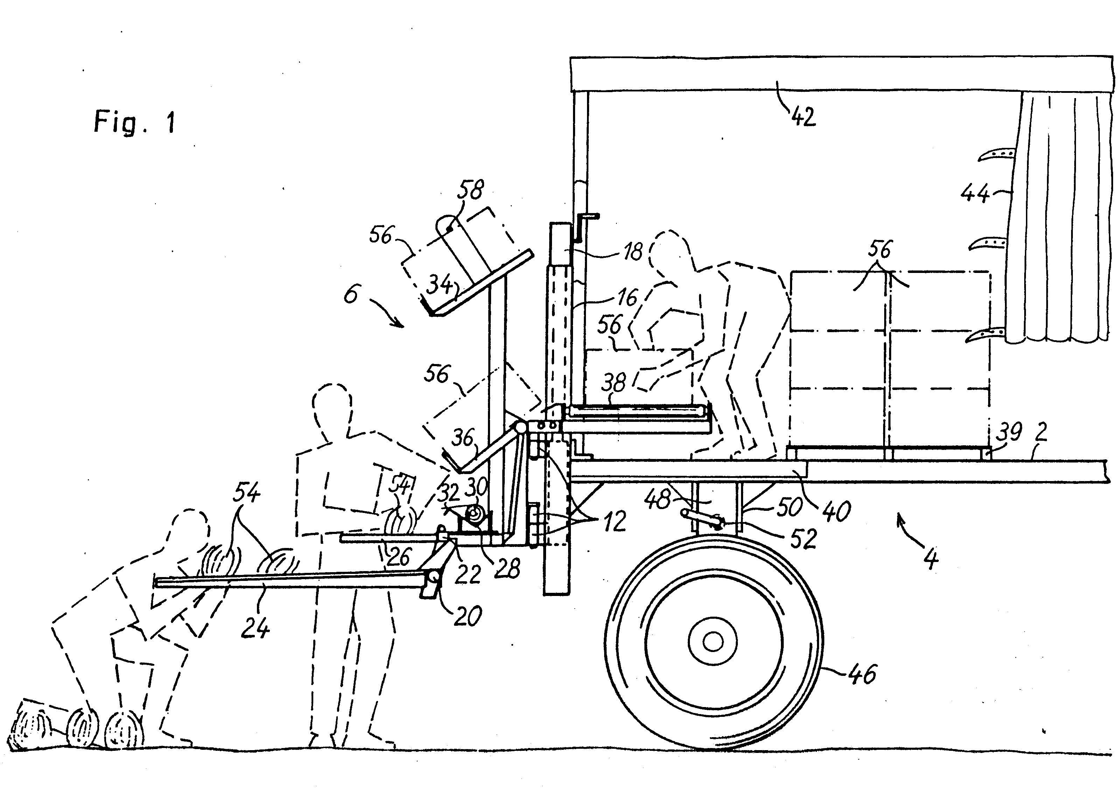

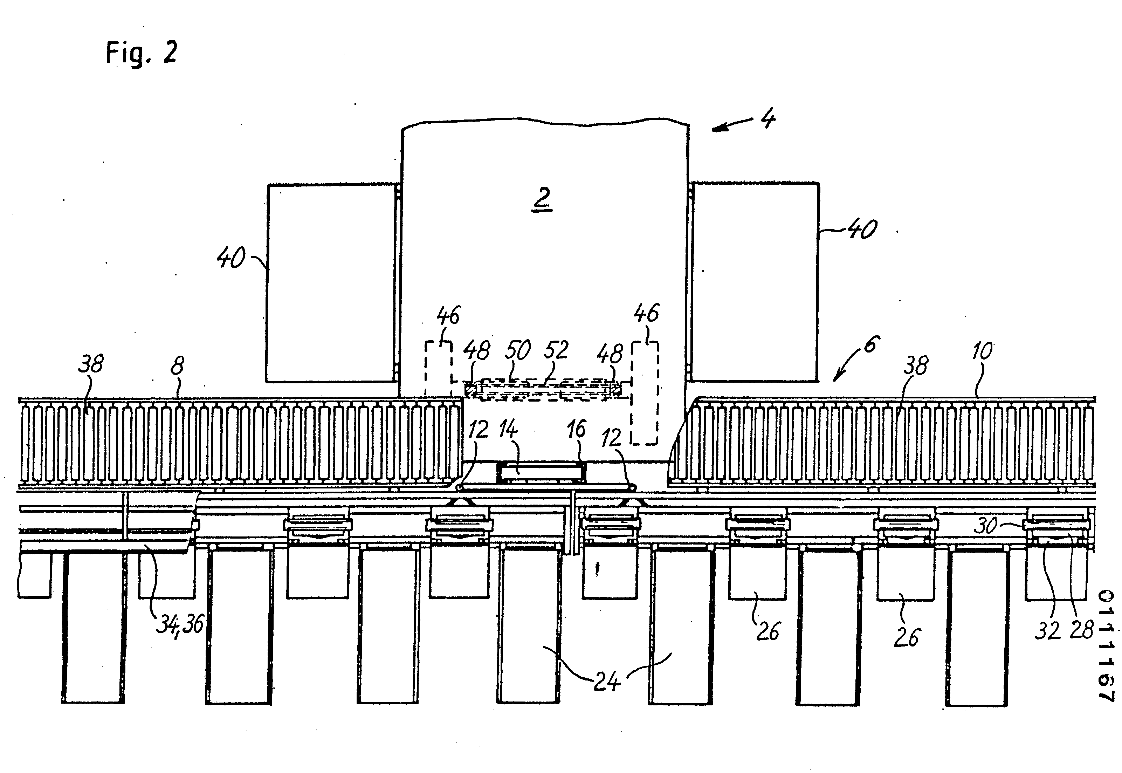

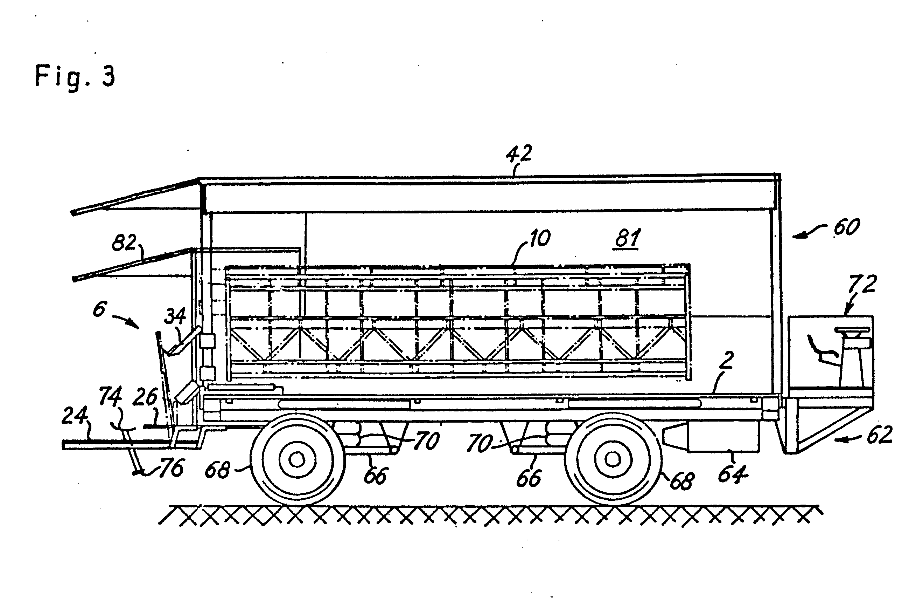

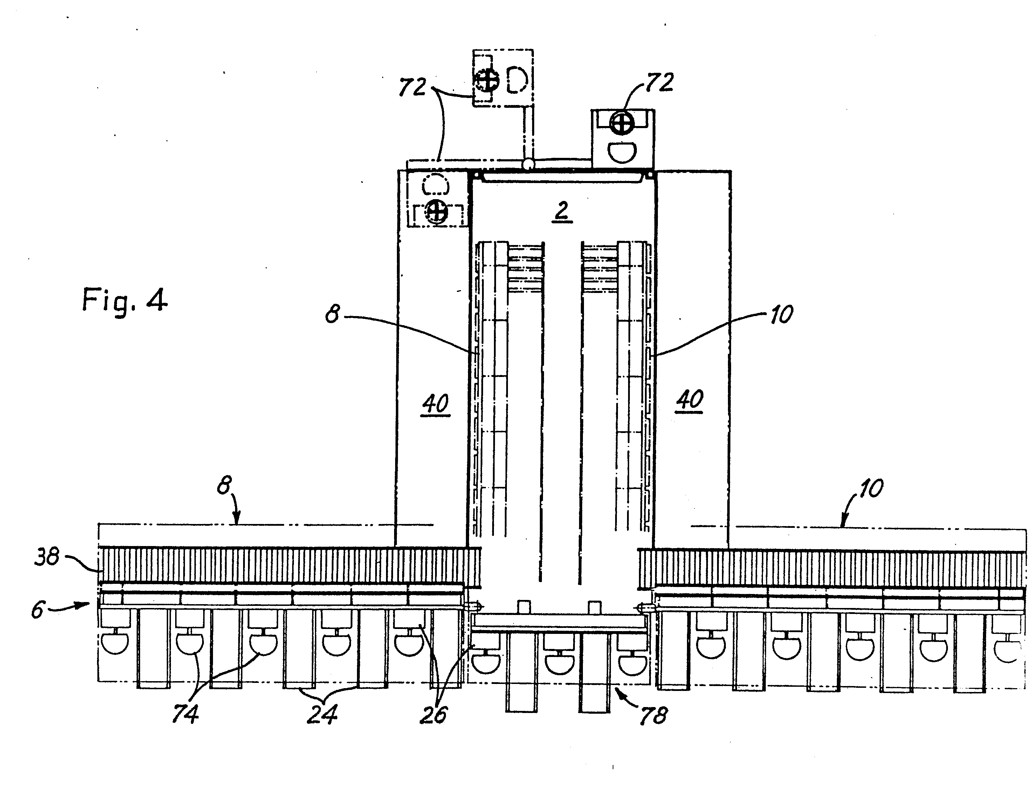

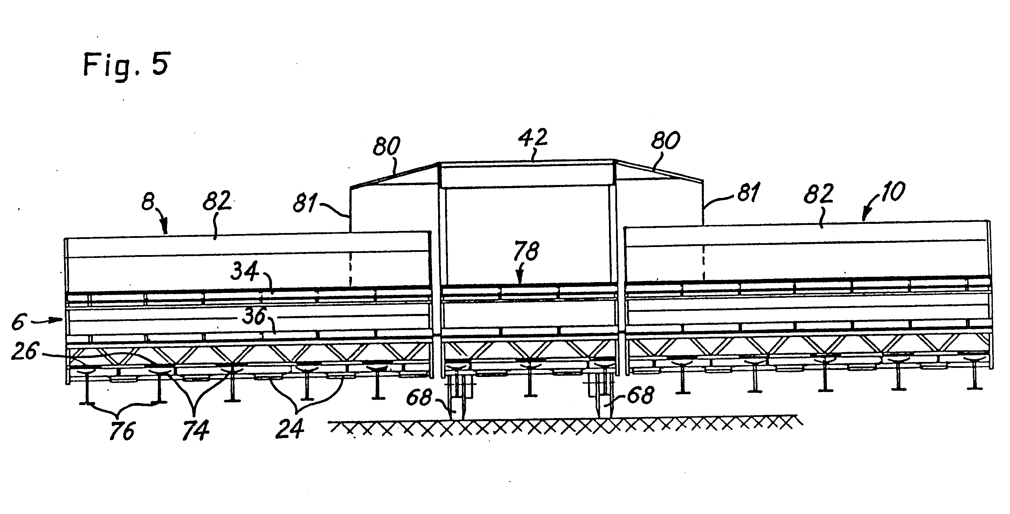

Im einfachsten Fall, insbesondere bei verhältnismäßig geringer gewünschter Arbeitsbreite, kann der betreffende Querbalken 6 in einteiliger Ausführung und als selbständiges Teil auf einen Lastwagen, Anhänger oder dergl. aufgelegt werden. Auf diese Weise wird für kleinere Betriebe unter Beibehaltung der Hauptvorteile der Erfindung eine preisgünstige Lösung geschaffen. Die Figuren 3 - 5 zeigen indessen noch eine andere zweckmäßige Ausführung für größere Betriebe, wobei für entsprechende Teile wiederum die gleichen Bezugszeichen verwendet sind wie bei der Ausführung nach Fig. 1 und 2. Die nachfolgende Beschreibung beschränkt sich im wesentlichen darauf, die Abweichungen zu schildern.

Bei der Ausführung nach Fig. 3 - 5 ist ein Aufbau 60 mit der Ladeplattform 2, dem Querbalken 6, Auflagetischen 40 und der Überdachung 42 als Wechselbrücke auf einem - vorzugsweise allradgetriebenen - selbstfahrfähigen Wechselbrückenträgerfahrgestell 62 angeordnet. Das Wechselbrückenträgerfahrgestell 62, das i.ü. einer Norm folgen kann (z.B. DIN 7013, 7014 und 7018), hat einen Antriebsmotor 64, über Schwinghebel 66 an den Achsen der Räder 68 angreifende Luftfederbälge 70 und an seinem vorderen Ende einen um $180^{\circ}$ seitwärts und rückwärts ausschwenkbaren Fahrerstand 72, um die Plattform 2 während der Feldarbeit freizuhalten. Auch das Fahrgestell 62 wird zweckmäßigerweise eine verstellbare Spurweite aufweisen. Dazu noch hat es mit Vorteil Allradlenkung, wobei der Schwenkwinkel der Räder 68 bis zu etwa $180^{\circ}$ betragen kann, d.h. die Räder zwei um $90^{\circ}$ gegeneinander versetzte Grundstellungen mit Schwenkmöglichkeit um jeweils $\pm 45^{\circ}$ aufweisen können, was sich auf hydraulischem Wege ohne weiteres verwirklichen läßt. Für den Straßenverkehr ist die Lenkung der beiden hinteren Räder blockierbar. Im übrigen ist das Fahrgestellt 62, etwa durch einen dieselhydraulischen Antrieb, für ein ausgesprochenes Langsamfahrvermögen eingerichtet.

Im Gegensatz zur Ausführung nach den Figuren 1 und 2 sind bei derjenigen nach Fig. 3 - 5 an den Packtischen 26 des Querbalkens Sitze 74 mit Fußstützen 76 für die dort beschäftigten Personen vorgesehen, und der Querbalken ist, bestehend aus zwei einander im wesentlich spiegelsymmetrisch gleichen schwenkbaren Kragarmen 8 und 10 sowie einem nicht schwenkbaren Mittelstück 78 etwa von der Breite der Ladeplattform 2, dreiteilig ausgeführt. Mit den Kragarmen 8 und 10 ist auch das Mittelstück 78 höhenverstellbar. Im Bereich des Mittelstücks ist die Förderbahn 38 unterbrochen, um die gesamte Plattform 2 als Arbeitsfläche ausnutzen zu können. Diese Maßnahme und die Dreiteiligkeit des Querbalkens erlauben es zudem, den Schwenkwinkel der Kragarme 8 und 10 auf beispielsweise jeweils $200^o$ zu vergrößern. Damit können die Kragarme während der Feldarbeit, etwa um einem Hindernis auszuweichen, vorübergehend nach hinten, ggf. bis zur gegenseitigen Berührung, geschwenkt werden.

Die Palettenauflagetische 40, die sich im Beispiel der Figuren 3 - 5 über die gesamte Länge der Ladeplattform 2 erstrecken, können als abklappbare Bordwände ausgebildet sein. Die Überdachung 42 weist über diese abgeklappten Bordwände hinausreichende, nach unten abklappbare, Abschnitte 80 auf, an die sich außenseitig jeweils eine herabhängende Schürze 81 anschließt, um Pack- wie Ladegut und Arbeitskräfte vor Wind und Witterungseinflüssen zu schützen. Ebenso sind die Kragarme 8 und 10 jeweils mit einer eigenen, mitschwenkbaren und zum Teil abklappbaren Überdachung 82 ausgerüstet, die, sich auf der Seite der Förderbahn 38 nach unten fortsetzend, zugleich als Windschutz gegen ein Abwerfen der auf der Behälterauflage 34 aufliegenden Leerbehälter dienen kann.

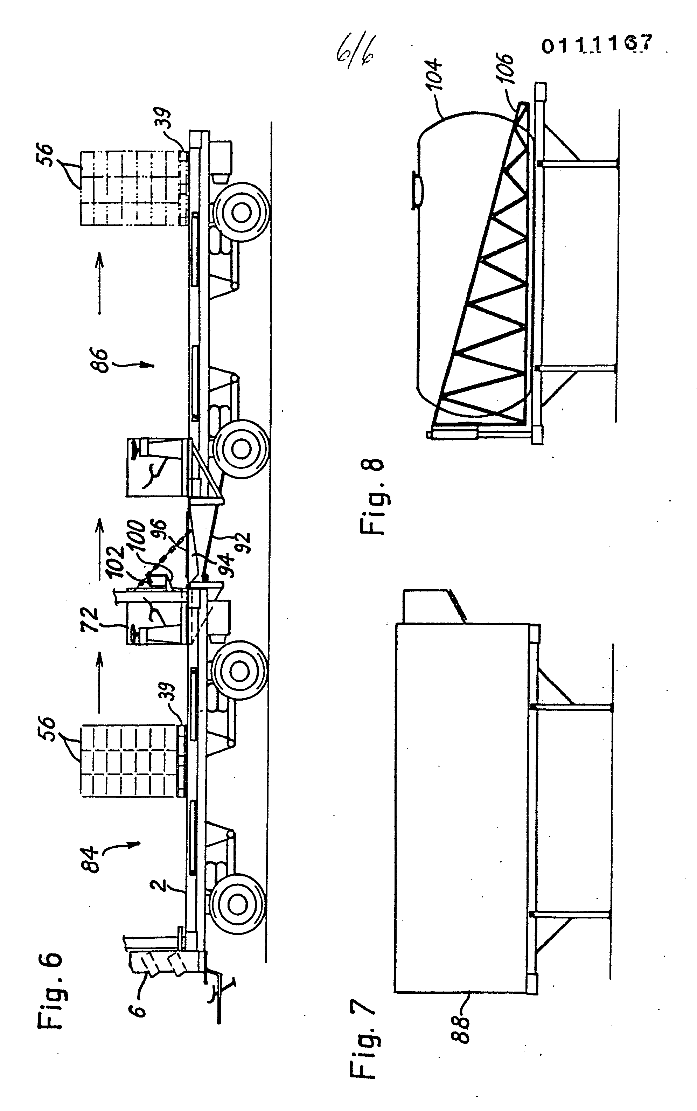

Fig. 6 zeigt, wie ein Gerät 84 der soeben beschriebenen Art während des Betriebes oder auch bedarfsweise in Betriebsintervallen stirnseitig mit einem zweiten Wechselbrückenfahrzeug, 86, gekuppelt werden kann, um hierauf die beladenen Paletten 39 für den Abtransport übergeben zu können. Dabei ist über die Luftfederbälge 70 oder sonstige Hebemittel ein Niveauausgleich herstellbar. Der Aufbau des Fahrzeugs 86 wie übrigens auch die Ladeplattform 2 des erfindungsgemäßen Geräts kann im Bedarfsfall aus einem Kühlkoffer 88 bestehen, wie er in Fig. 7 dargestellt ist.

Fig. 6 läßt des weiteren noch erkennen, daß zur Ladeplattform 90 des über eine Deichsel 92 angekuppelten Fahrzeugs 86 von dem erfindungsgemäßen Gerät 84 eine Übergabebrücke 94 herabklappbar ist, die in ihrer Mitte einen Drehtisch 96 aufweist. An einer vertikalen Führung 98 des erfindungsgemäßen Geräts 84 befindet sich eine Halterung 100 für eine Rolle 102 eines Netzes oder einer Folie, womit eine auf dem Drehtisch 96 aufruhende beladene Palette 39 umgeben werden kann.

Fig. 8 veranschaulicht schließlich noch, wie das vorausgehend beschriebene Wechselbrückenträgerfahrgestell 62 des erfindungsgemäßen Geräts auch in Verbindung mit noch anderen Aufbauten, wie z.B. einem Spritzaufbau 104 mit ausschwenkbaren Armen 106 für die Feldarbeit Verwendung finden kann. Zudem besteht die Möglichkeit, etwa an den Holmen 20 und 22 des Querbalkens 6 (Fig. 1) auch noch andere Einrichtungen als die zu diesem Zweck abnehmbaren Tische 24 und 26 etc. anzubringen, wie z.B. mit einem Vorratsbehälter verbundene Dosiergeräte zum Ausbringen von flüssigen, pulverförmigen oder körnigen Stoffen oder auch landwirtschaftliche Arbeitsgeräte. Auf diese Weise lassen sich wesentliche Bestandteile des erfindungsgemäßen Geräts auf mehrfache Weise nutzen.

Patentansprüche:

1. Fahrbares Hilfsgerät zum Zurichten, Sortieren und Verpacken von Gemüse, Blumen, Gartenbau- und Feldfrüchten
und dergl., mit

einem eine Ladeplattform (2) tragenden Fahrgestell (4; 62),

einem von dem Fahrgestell (4; 62) getragenen Querbalken (6),
der auf beiden Seiten des Fahrgestells überstehende Kragarme (8, 10) bildet,

an dem Querbalken (6) rückseitig angeordneten Packtischen
(26),

längs den beiden Kragarmen (8, 10) angeordneten Förderbahnen (38),

einer auf dem Querbalken (6) angeordneten Packbehälterauflage (34) für Leerbehälter wie, z.B. Kartons, und

mindestens einer weiteren Packbehälterauflage (36) für
die jeweils zu füllenden Behälter,

dadurch gekennzeichnet,

daß der Querbalken (6) am rückwärtigen Ende des Fahrgestells (4; 62) angeordnet ist,

daß die Packtische (26) ggf. zu mehreren entlang jedem
Kragarm (8, 10), mit gleichfalls an dem Querbalken (6)
angebrachten, weiter nach hinten reichenden Ablagetischen
(24) abwechseln,

daß die Packbehälterauflage (34) für Leerbehälter entlang dem Querbalken (6) verläuft und

daß die Packbehälterauflage (36) für die zu füllenden Behälter zwischen den Packtischen (26) und der jeweiligen Förderbahn (38) angeordnet ist.

2. Hilfsgerät nach Anspruch 1, dadurch g e k e n n - z e i c h n e t , daß die Ablagetische (24) niederiger als die Packtische (26) angeordnet sind.

3. Hilfsgerät nach Anspruch 1 oder 2, dadurch g e k e n n - z e i c h n e t , daß die Packbehälterauflagen (34, 36) für Leerbehälter und/oder die zu füllenden Behälter nach rückwärts und unten geneigt angeordnet sind.

4. Hilfsgerät nach einem der vorhergehenden Ansprüche, dadurch g e k e n n z e i c h n e t , daß die Packbehälterauflage (34) für Leerbehälter als von der Ladeplattform (2) her zu beschickende Gleitbahn ausgebildet ist.

5. Hilfsgerät nach Anspruch 4, dadurch g e k e n n - z e i c h n e t , daß sich über der Gleitbahn ein - vorzugsweise höhenverstellbares - band-, schnur- oder leistenförmiges Führungsmittel (58) erstreckt.

6. Hilfsgerät nach einem der vorhergehenden Ansprüche, dadurch g e k e n n z e i c h n e t , daß zumindest eine der Packbehälterauflagen (34, 36) einen tragenden Bestandteil des Querbalkens (6) bildet.

7. Hilfsgerät nach einem der vorhergehenden Ansprüche, dadurch g e k e n n z e i c h n e t , daß an den Packtischen (26) eine Auflage für Packmaterialrollen (30), verbunden mit einer Abtrennvorrichtung (32), eine Wiegeeinrichtung und/oder eine Lehre angeordnet ist.

8. Hilfsgerät nach Anspruch 7, dadurch g e k e n n - z e i c h n e t , daß die Abtrennvorrichtung (32) eine giebelförmige Trennkante aufweist.

9. Hilfsgerät nach einem der vorhergehenden Ansprüche, dadurch g e k e n n z e i c h n e t , daß hinter den Pack- tischen (26) - vorzugsweise mit Fußstützen (76) versehene - Sitze (74) angebracht sind.

10. Hilfsgerät nach einem der vorhergehenden Ansprüche, dadurch g e k e n n z e i c h n e t , daß die Ablagetische (24) und vorzugsweise auch die Packtische (26) sowie die ggf. dazugehörigen Sitze (72) hochklappbar an dem Querbalken (6) angebracht sind.

11. Hilfsgerät nach einem der vorhergehenden Ansprüche, dadurch g e k e n n z e i c h n e t , daß die Ablagetische (24), die Packtische (26) sowie ggf. auch die dazugehörigen Sitze (74) und/oder die Abtrennvorrichtungen (32) etc. seitlich versetzbar - und vorzugsweise abnehmbar - an dem Querbalken (6) angebracht sind.

12. Hilfsgerät nach einem der vorhergehenden Ansprüche, dadurch g e k e n n z e i c h n e t , daß die Förderbahnen (38) aus - vorzugsweise zur Ladeplattform (2) hin geneigten - Rollenbahnen bestehen.

13. Hilfsgerät nach einem der vorhergehenden Ansprüche, dadurch g e k e n n z e i c h n e t , daß der Querbalken (6) höhenverstellbar auf dem Fahrgestellt (4; 62) angebracht ist.

0111167

14. Hilfsgerät nach einem der vorhergehenden Ansprüche, dadurch gekennzeichnet , daß die beiden Kragarme (8, 10) des Querbalkens (6) nach oben oder - vorzugsweise - über das Fahrgestell (4; 62) nach vorne schwenkbar sind.

15. Hilfsgerät nach einem der vorhergehenden Ansprüche, dadurch gekennzeichnet , daß die beiden Kragarme (8, 10) des Querbalkens (6) nach hinten schwenkbar sind.

16. Hilfsgerät nach einem der vorhergehenden Ansprüche, dadurch gekennzeichnet , daß die Ladeplattform (2) durch mindestens einen hochklappbaren, einziehbaren oder abnehmbaren seitlichen Auflagetisch (40) verbreiterbar ist.

17. Hilfsgerät nach einem der vorhergehenden Ansprüche, dadurch gekennzeichnet , daß die Ladeplattform (2) und/oder die Auflagetische (40) und/oder der Querbalken (6) eine - erforderlichenfalls zum Teil abklappbare - Überdachung (42, 80, 82) aufweisen.

18. Hilfsgerät nach Anspruch 17, dadurch gekennzeichnet , daß sich an die Überdachung (42, 80) der Ladeplattform (2) bzw. der Auflagetische (40) bzw. diejenige (82) des Querbalkens (6) nach unten hin eine Schürze (z.B. 81) oder ein ggf. zusammenraffbarer Vorhang (44) anschließt.

19. Hilfsgerät nach einem der vorhergehenden Ansprüche, dadurch gekennzeichnet , daß das Fahrgestell (4; 62) eine verstellbare Spurweite aufweist.

20. Hilfsgerät nach einem der vorhergehenden Ansprüche, dadurch g e k e n n z e i c h n e t , daß das Fahrgestell (62) am vorderen Ende einen seitlich ausfahrbaren - z.B. herausschwenkbaren - Fahrerstand (72) aufweist.

21. Hilfsgerät nach einem der vorhergehenden Ansprüche, dadurch g e k e n n z e i c h n e t , daß das Fahrgestell (62) Allradlenkung, vorzugsweise mit zwei wählbaren um 90 $^{o}$ gegeneinander versetzten Grundstellungen der Räder (68) aufweist.

22. Hilfsgerät nach einem der vorhergehenden Ansprüche, dadurch g e k e n n z e i c h n e t , daß das Fahrgestell (62) Allradantrieb aufweist.

23. Hilfsgerät nach einem der vorhergehenden Ansprüche, dadurch g e k e n n z e i c h n e t , daß die Ladeplattform (2) mitsamt dem Querbalken (6) und daran anschließenden Teilen (24, 26, 72, 40 etc.) eine Wechselbrücke bildet und das Fahrgestell (62) ein Wechselbrückenträgerfahrgestell ist.

24. Hilfsgerät nach Anspruch 23, dadurch g e k e n n - z e i c h n e t , daß das Fahrgestell (62) und/oder die Wechselbrücke eine - vorzugsweise auch während der Fahrt anwendbare - Hebevorrichtung (66, 70) aufweist.

25. Hilfsgerät nach einem der vorhergehenden Ansprüche, dadurch g e k e n n z e i c h n e t , daß die Ladeplattform (2) stirnseitig eine abklappbare und/oder ausfahrbare Übergabebrücke (94) aufweist.

26. Hilfsgerät nach Anspruch 25, dadurch g e k e n n - z e i c h n e t , daß sich in der Übergabebrücke (94) ein

0111167

Drehtisch (96) befindet und in dessen Nähe eine ggf. auf und ab verfahrbare Spendevorrichtung (100) für ein bandförmiges Hüllmaterial abgeordnet ist.

Fig. 1

Fig. 2

Fig. 3

0111167

Fig. 4

72 72

2

8 10

40 40

8 10

38

6

74 24 26 78

Fig. 5

Fig. 6

Fig. 7

Fig. 8

0111167

Europäisches
Patentamt

**EUROPÄISCHER RECHERCHENBERICHT**

**0111167**
Nummer der Anmeldung

EP   83 11 1187

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | US-A-2 590 965   (HUSTON)<br><br>* Spalte 3, Zeile 51 - Spalte 7, Zeile 65; Abbildungen 1-10 *<br><br>--- | 1,3,4, 12,14 | A 01 D   45/00<br>A 01 D   46/20<br>B 65 B   25/04 |
| X | US-A-2 699 877   (HUSTON)<br><br><br>* Spalte 3, Zeile 34 - Spalte 9, Zeile 47; Abbildungen 1-23 *<br><br>--- | 1,3,4, 6,12, 14,23 25 | |
| A | FR-A-1 306 765   (BUD ANTLE)<br><br>* Seite 4, linke Spalte, Abschnitte 3,4; rechte Spalte; Abbildungen 3,4,5,6 *<br><br>--- | 1,7,8, 9 | |
| A | US-A-3 827 446   (HONEYCUTT)<br><br>* Spalte 2, Zeile 44 - Spalte 4, Zeile 44; Abbildungen 1,2,3,4 *<br><br>----- | 9,17, 18 | **RECHERCHIERTE SACHGEBIETE (Int. Cl. ³)**<br><br>A 01 D<br>A 01 B<br>B 65 B |

Der vorliegende Recherchenbericht wurde für alle Patentansprüche erstellt.

| Recherchenort | Abschlußdatum der Recherche | Prüfer |
|---|---|---|
| DEN HAAG | 14-02-1984 | VERMANDER R.H. |